# EUROPEAN PATENT APPLICATION

(11) **EP 4 421 634 A1**
(43) Date of publication of application: **28.08.2024**
(21) Application number: 23398003.6
(22) Date of filing: 27.02.2023
(51) Int. Cl.: G06F 9/50, H04L 67/10

(54) **COMPUTING RESOURCE MANAGEMENT**

(71) Applicant: Vodafone Portugal - Comunicações Pessoais, S.A., 1998-017 Lisboa (PT); Vodafone Group Services Limited, Newbury RG14 2FN (GB)
(72) Inventor: Ribeiro Santos, Rudolfo, London, W2 6BY (GB)
(74) Representative: Boult Wade Tennant LLP

(57) **Abstract**

System and method for managing computing resources providing services to user equipment, UE, the method comprising receiving information indicating an event, wherein the event has an associated first user equipment, UE, and further wherein there is at least one computing task executing on a first processor and originating at the first user equipment, UE. In response to receiving the information indicating the event, moving the at least one computing task to a second processor from the first processor, wherein data generated by the second processor executing the at least one computing task is provided to a consumer of the data at a lower latency than data generated by the first processor executing the at least one computing task to the same consumer of the data.

## Description

### Field of the Invention

The present invention relates to a system and method for managing computing resources, and in particular for managing local breakout in a telecommunications network.

### Background of the Invention

Local breakout functionality in a telecommunications network allows a computing function, such as video processing, to take place in a computing device close to the radio access network (RAN) rather than routed through the network to a remote processor (e.g., a virtual processor) that may be further away. This avoids long distance network traffic and can improve latency and other performance metrics, as perceived by the requesting device where the computer function originates, or which receives the results of this processing. Local breakout can allow traffic to be routed locally to edge computing units to provide services closer to where traffic is generated and consumed. This can reduce the time necessary to take decisions based on the processed data. This reduces latency and enables faster responses.

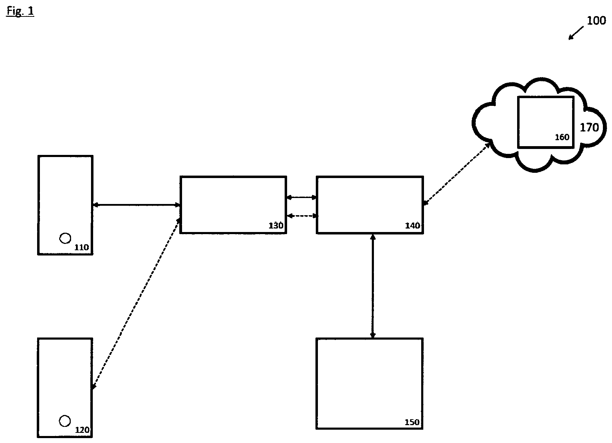

Figure 1 shows a schematic diagram of a system 100 that illustrates local breakout and provides a first user equipment (UE) 110 and a second UE 120 with computing services. In this example, both UEs 110, 120 are provided with telecommunications services using the same base station or gNodeB 130. Requests for computing services (and outgoing data and incoming data) originating at the first UE 110 are shown as solid arrows. Requests for computing services (and outgoing data and incoming data) originating at the second UE 120 are shown as dotted arrows. A core network 140 routes these requests to different processors based on data type, internet protocol (IP) ranges, or other rules or policies. An edge computing processor 150 supplies computing services and returns data to the first UE 110 where the rules or policies dictate that this should occur. A virtual processor 160 accessible over the internet 170 provides computing services and returns data to the second UE 120, again determined by the rules or policies that are applied.

WO2010/128165 describes a system in which policy enforcement procedures are used to provide a network element supporting local breakout with rules needed to handle traffic routing and local breakout procedures.

However, a policy-based system does not always direct traffic to use local breakout in the most effective way. At any one time, more important traffic may be sent to remote computing resources, whilst less important traffic is handled by lower-latency, nearby resources leading to inefficiencies and unnecessary processing delays.

Therefore, there is required a method and system that overcomes these problems.

### Summary of the Invention

Data processing or other computing services may be provided across a telecommunications network. For example, a user equipment (UE) can request video processing services, such as augmented reality, image processing or video conferencing services. The quality and responsiveness of a service may depend on the round-trip time or latency of such data or computing services. Computing processes are provided by processors such as local edge computers or virtual servers operating across the telecommunications network. Typically, latency may depend on the physical distance between the UE (or other consumer of the data) and a processor providing the UE with the computing services. Reducing the distance will usually reduce latency. There may be other sources of latency that are not dependent on physical distance. For example, the quality of service of a telecommunications channel between the UE and the processor may also affect latency but large distance differences may have a greater effect.

A data management component determines the occurrence of an event. This may be detected by the data management component receiving information indicating the event or data representing the event itself. For example, the data management component may form part of a user plane function, UPF. The event may be detected directly (e.g., using a sensor) or inferred indirectly (e.g., by detecting a consequential change in a different parameter, data element, flag, etc.). The UE may send an event notification, or such an event notification may be generated by a different entity.

The event may directly or indirectly relate to the UE. For example, the UE may move to a particular location, or the UE may trigger the event in another way. The UE may consume the results of the data or computing service or be affected by these results in some way. For example, the UE may receive a notification or other message based on the computing service provided to another entity.

One or more computing tasks originate at the UE. This may be either directly, in the case of requested computing tasks by a user of the UE, or indirectly when a UE triggers a computing task in another way, such as a UE entering a particular area. The computing task or tasks are carried out by a processor providing data services to the UE or to another entity. For example, the processor may be located far from the UE or a base station (gNodeB) serving the UE or consumer of the data. The processor may be a virtual or cloud computing processor and data resulting from the one or more computing tasks are provided to the UE or another entity over the telecommunications network (e.g., through the base station). Therefore, the latency of the computing services provided by the processor may be considered as high. This high latency service may be acceptable to the consumer of data or computer services (e.g., a user of the UE) in the current situation or context.

After the data management component detects the event or otherwise receives data indicating the event, then the one or more computing tasks that were operating on the current processor (e.g., providing high latency computing services) are transferred to a different processor that can provide lower latency computer services to the UE or related consumer of the data, for the one or more computing tasks than the original processor. For example, the new processor may be located closer to the UE or consumer than the original processor. The new processor carrying out the one or more computing tasks may be an edge computing processor that is located at or close to the base station (gNodeB) that is also serving the UE. Whilst the higher latency was acceptable to the user of the UE or consumer before the event, following the event a lower latency is required (or may be more appropriate). For example, the event may indicate an emergency that requires a faster response.

Optionally, in order to make room for the additional processing or allow the transfer of the one or more computing tasks, then one or more computing services operating on the lower latency processor (e.g., closer to the UE or with a better quality of service) are moved to a different, higher latency processor. This may be the same processor that originally provided computing services to the first UE. The one or more computing services that are moved from the lower latency processor to the higher latency processor may be provided to a different UE (i.e., a UE not associated with the event). Therefore, priority of service may be dynamically managed rather than statically provided based on rules.

Against this background and in accordance with a first aspect there is provided a method for managing computing resources providing services to user equipment, UE, the method comprising the steps of:
receiving information indicating an event, wherein the event has an associated first user equipment, UE, and further wherein there is at least one computing task executing on a first processor and originating at the first user equipment, UE; and
in response to receiving the information indicating the event, moving the at least one computing task to a second processor from the first processor, wherein data generated by the second processor executing the at least one computing task is provided to a consumer of the data at a lower latency than data generated by the first processor executing the at least one computing task to the same consumer of the data. Therefore, computing tasks, services and resulting data can be managed more effectively and respond to changes in situations and priorities. This dynamic approach may require fewer computing resources and still maintain acceptable levels of service under different circumstances or in general, better use may be made of the limited lower latency computing resources.

Optionally, in response to receiving the information indicating the event, the method may further comprise moving at least one computing task originating at a second UE executing on the second processor to a different processor, wherein data generated by the different processor executing the at least one computing task is provided to a consumer of the data at a higher latency than data generated by the first processor executing the at least one computing task to the same consumer of the data. Therefore, computing resources on the lower latency processor can be freed up by moving away other, lower priority services, either permanently or temporarily. If there are sufficient computing resources to provide both UEs with computing services then there may be no need to move the computing task or tasks of the second UE away from the lower latency processor. There may be more than one second UE that have their computing tasks moved to a higher latency processor. The method may also determine how many computing tasks need to be moved following the event to free up enough computing resources. Thresholds or contingency criteria may be monitored during this process so that sufficient resources at lower latency (e.g., edge computing) are maintained.

Preferably, the different processor may be the first processor. It may also be a different processor.

Preferably, the consumer of the data provided by the first or second processor may be the UE where the computing task originates. However, the consumer of the data may be a separate entity or server in some circumstances.

Optionally, the second processor may be closer to the first UE than the first processor. There may be other contributing factors to the differences in latency. Latency may vary and monitored so that computing tasks are transferred correctly. For example, latency of one processor may rise so that it now becomes a high latency processor when compared to other processors.

Preferably, the second processor may be an edge computing processor. Other processor types may be used including those that are served by a lower latency telecommunication channel or protocol.

Advantageously, the edge computing processor may be a multi-access edge computing, MEC, processor.

Preferably, the first processor may be a virtual or cloud computing processor. This may be provided by a cloud computing service or other third party organisation.

Optionally, the information indicating the event may originate at a sensor. There may be different types of sensor including temperature, light, fire, smoke, location, pressure or other sensors.

Optionally, the sensor may be within the first UE.

Optionally, the sensor is a location sensor. This may be a GPS receiver, Bluetooth, Bluetooth BLE or other location sensor.

Optionally, the event may be the first UE entering a location. This may be determined by a dedicated sensor, the UE registering with a base station withing a particular cell site, GPS triangulation, or other method of detection, for example.

According to a second aspect there is provided a system comprising:
a first processor;
a second processor; and
a data management component configured to:
   receive information indicating an event, wherein the event has an associated first user equipment, UE, and further wherein there is at least one computing task executing on the first processor and originating at the first user equipment, UE;
   in response to receiving the information indicating the event, move the at least one computing task to the second processor from the first processor, wherein data generated by the second processor executing the at least one computing task is provided to a consumer of the data at a lower latency than data generated by the first processor executing the at least one computing task to the same consumer of the data.

Optionally, the data management component may be further configured to:
in response to receiving the information indicating the event, movie at least one computing task originating at a second UE executing on the second processor to a different processor, wherein data generated by the different processor executing the at least one computing task is provided to a consumer of the data at a higher latency than data generated by the first processor executing the at least one computing task to the same consumer of the data.

Optionally, the data management component may be a user plane function, UPF. Other components or servers may be used.

Preferably, the second processor may be a multi-access edge computing, MEC, processor and/or within a mobile private network, MPN.

In accordance with a further aspect, there is provided a telecommunications network (e.g., a cellular network) comprising the system described above and operated in accordance with any method, described above.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of an existing system for providing computing services to user equipment or other data consumers;
FIG. 2 shows a schematic diagram of an improved system for providing computing services to user equipment or other data consumers, given by way of example only;
FIG. 3 shows a schematic diagram of a further system for providing computing services to user equipment or other data consumers, given by way of example only; and
FIG. 4 shows a flowchart of a method for providing computing services to user equipment or other data consumers.

It should be noted that the figures are illustrated for simplicity and are not necessarily drawn to scale. Like features are provided with the same reference numerals.

### Detailed description of the preferred embodiments

Current breakout processes do not contemplate priorities that evolve with time or respond to changing circumstances or events. In contrast, the described system and method react dynamically to specific events and changing situations. This enables defined services to be allocated computing resources more efficiently and effectively so that those instantaneous services that need to be local (e.g., on edge computing processors) are moved to the most appropriate processors. This helps improve systems where there may be few or restricted local computing resources without important services being left without sufficient resources.

Local breakout is a technique used in mobile networks and especially in Mobile Private Networks (MPNs) to break out traffic to a customer network or to a local computing unit (e.g., edge computing) to reduce latency, increase bandwidth and/or to provide local data analysis and decision-making services.

Standard or existing local breakout processes are static and generally defined according to traffic patterns like Virtual Local Area Network (VLAN) or Internet Protocol (IP) ranges. These are the principal communications protocols used for relaying datagrams (packets) across a network or internetwork using an internet protocol suite. This can be responsible for routing packets across network boundaries and is the primary protocol that establishes the internet.

The system and method add a priority based local breakout analysis process, which consists of a component that prioritises traffic, applications and/or services to by providing a local breakout function where appropriate, so that certain data is consumed closer to where it is generated in order to reduce latency for higher priority services.

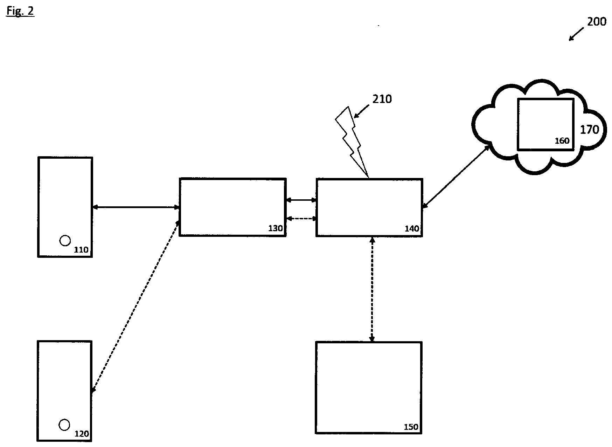

Figure 2 shows a schematic diagram of a system 200 similar to the system 100 of Figure 1 but including further functionality to change the location of computing tasks associated with different UEs simultaneously. The computing tasks may originate at the different UEs or they may be triggered directly or indirectly by the different UEs. Similar features have been provided with the same reference numerals. The core network 140 (or a component of the core network 140) is configured to detect the occurrence of an event (indicted by arrow 210). Before the event occurred, the system 200 operated (at least transiently) in a similar way to that of system 100 of Figure 1, i.e., the edge computing processor 150 supplied computing services and returned data to the first UE 110 (or other consumer) and the virtual processor 160 (accessible over the internet 170) provided computing services and returned data to the second UE 120 (or other consumer). After the event 210 is detected or is determined, then the core network 140 or another data management component transfers operation of the computing service or task so that the edge computing processor 150 suppling computing services and returning data to the second UE 120 and the virtual processor 160 (accessible over the internet 170) provides computing services and returns data to the first UE 110. This is illustrated by the different arrangement of dotted and solid arrows in Figure 2. In the case that only the second UE 120 is being served by the base station 130, then only the computing service or services originally provided by the virtual processor 160 is moved to the edge computing processor 150. The system 200 may be implemented within a MPN or another telecommunications environment.

The original allocation of processors and processor types to different computing tasks originating at or from different UEs may be achieved in different ways. This may be on a first come, first served basis or according to prioritisation rules (e.g., based on computing task type, user account priority, or IP addresses or ranges).

In this example, the virtual processor 160 is representative of a processor that provides computing services (or data services) to the UEs 110, 120 with a higher latency than the edge computing processor 150 (or any other lower latency processor). In this example, this is due to the physical location of the edge computing processor 150 being closer to both UEs 110, 120 than the virtual processor 160. However, the source of latency may not be wholly dependent on processor location as telecommunication channel quality of service or number of intermediate nodes encountered by the data, may also contribute to latency.

Whilst these examples include two UEs and two processors, any number of UEs may be served by any number of processors. For example, where there are more than one edge computing processor 150, then lower latency services may be provided to a greater number of UEs. Furthermore, a single processor may have capacity to serve more than one UE with computing tasks. Computing services may be directed to the lower latency processor or processors until they reach a certain capacity or when their latency increases. Further requests may then be passed to virtual processors 160 and the (pre-event) allocation may be based on certain criteria, rules, or policies. After an event occurs then the allocation of lower latency processing changes, as described previously, with computer tasks or services associated with the event or UEs associated with the event moved to lower latency processors. Additionally, more than one event may take place and so the allocation can change or react with each event. Different events may have different priorities. Therefore, computing tasks moved to a lower latency processor 150 following a first event may be moved to a higher latency processor 160 following a higher importance or priority event relating to the same or a different UE.

For example, an event indicating a possible security breach may result in data relating to the UE forming part of the security breach being moved from a higher latency processor 160 to lower latency processor 150. Should a further event take place with a higher priority relating to a different UE (e.g., a confirmed security breach or a physical emergency such as a fire) then the data processing related to the possible security breach may be moved back to the higher latency processor 160 if computing resources are required to handle the higher priority event data on the lower latency processor 150.

The data or computing services may relate to the same UE. For example, a UE may request video streaming services and the same UE may be the cause of an event involving a suspicious financial transaction. In this case, the event 210 causes processing of the streaming video may be transferred to the higher latency processor 160 and the processing of the financial data may be moved to (or commences on) the lower latency processor 150.

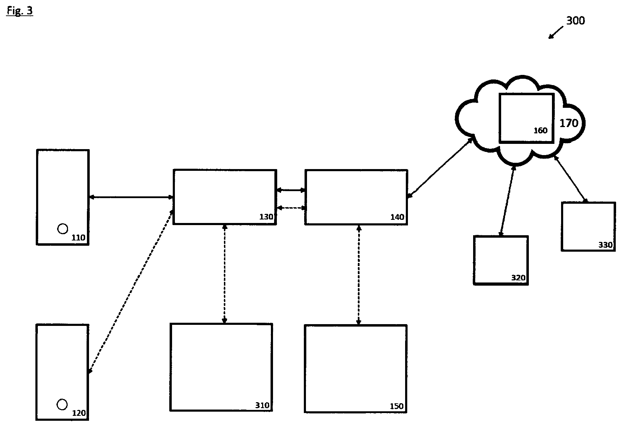

Figure 2 illustrates a simplified example system 200, which includes only two processors or computing units (i.e., the edge computing processor 150 and the virtual processor 160 accessible over the internet 170). However, the concept can be scaled to include further components. Figure 3 shows a schematic diagram of a further example system 300 that can be scaled in this way. For example, this system 300 may include further edge computing processors. A further edge computing processor 310 may be located at and/or directly connected to the base station or gNodeB 130. This can provide even lower latency computing services to UEs connected to or served by the same base station 130.

The further processors 320, 330 may also be accessible over the internet 170. These further processors 320, 330 may provide computing services to different UEs at different latencies. Latencies may be estimated (e.g., by determining relative locations and distances) or by test measurements (e.g., measuring packet response times). Therefore, computing services may be transferred between different processors following detected events and different event priorities or categories may be used to determine which processors to receive which associated computing tasks. For example, higher category or severity events may be moved to lower latency processors (as determined or detected for different UEs). Therefore, a graduated level of events and corresponding latencies can be provided for multiple UEs, computing services and processors.

The events may have associated time frames. In other words, computing tasks may be transferred following an event but may be moved back to higher latency processors after a predetermined or configurable time (e.g., if subsequent and more recent events occur). Therefore, events do not need to take up more edge computing or lower latency processing than necessary. Events may be time limited or have an expiry. This may be predetermined or form part of data or information indicating the event, for example.

In the example shown in Figure 3, a RAN edge computing processor 310 is connected to the base station 130. A distributed edge computing processor 320 and a standard edge computing processor 330 (e.g., AWS(RTM) or Azure(RTM)) is accessible over the internet 170.

In a further example implementation, an enterprise may have environmental sensors and monitoring cameras, which execute a detection algorithm. The monitoring cameras may be present to determine the identity and/or type of individuals present in an area. In normal circumstances (and most of the time) the data from the monitoring cameras (i.e., images and video data) are processed by a processor far from the cameras. This may be achieved using distributed computing or virtual servers (e.g., processor 160) that provides an output to the enterprise having a relatively high latency response). However, should an environmental sensor detect a specified anomaly (such as a rapid increase in temperature indicating a possible fire) then this may form an event that triggers a movement in the computing service that processes the images and video data. Therefore, the images and video data from the monitoring cameras are processed by an edge computing processor 150 rather than the virtual server 160. The output from the computing service (i.e., identities of individuals within the area) can be provided quicker than when processed by the virtual server 160. Therefore, these individuals can be warned about the potential danger faster than previously achieved (e.g., by SMS or other notification method). Other actions may be taken more rapidly such as shutting down power to overheating equipment. In the case of fire prevention, an area of computing equipment that is overheating may be flooded with inert gas to avoid further damage. However, such inert gas cannot be used if people are present. Therefore, an automated decision needs to be made that relies on rapid processing of imaging or video data. In this situation, time may be critical and removing latency can limit damage and danger.

In summary, the concept dynamically manages local breakout so that data consumption engines are executed based on a priority, allowing the data processing to be moved quickly and providing more appropriate latency at any particular time.

The priority-based solution may also be used to balance power consumption between buildings. In a situation where a customer has two buildings and two edge computing processors, the edge computing workloads may be directed to where more green energy is being produced (e.g., by using solar panels, wind turbines). In this case, the event may be changes in power generation metrics. This may provide environmental and cost benefits.

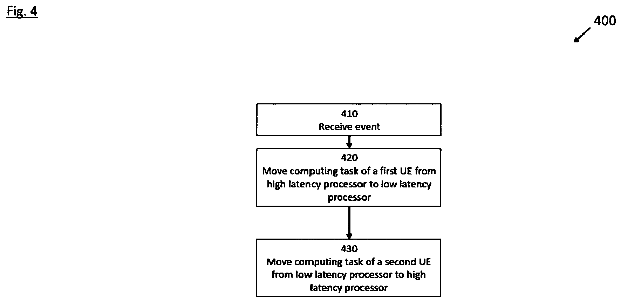

Figure 4 shows a flowchart of a method 400 for managing computing resources. In particular, the method adds priority based local breakout to the system 100, 200. At step 410 an event is received. The event may be directly linked or associated with a UE 110. For example, the UE 110 may indicate a change of context, location and/or data processing requirements. The event may originate with a mobile application operating on the UE 110 or from an operating system of the UE 110. Alternatively, the UE 110 may be indirectly linked or associated with the UE 110. For example, the UE 110 may trigger an external sensor (e.g., Bluetooth or Bluetooth Low Energy) or the UE 110 may be detected entering a location or moving into a particular area (e.g., because it registers with a particular base station or gNodeB serving that area or cell site). Triangulation may be used to detect the UE 110 (e.g., using GPS, Bluetooth, or cell sites) and trigger the event.

At the time of the event, a computing task of the UE 110 is being processed by a server, such as the virtual processor 160. The product or results of this computing task are provided to the UE 110 or another data consumer, over the internet 170. Therefore, the virtual processor 160 is providing data at a relatively high latency when compared to edge computing processors that may be located closer to the UE 110 or attached to or within the base station or gNodeB 130 that is serving the UE 110.

In response to the event being received, detected and/or processed (e.g., at a server or data management component, such as the core network 140) then the computing task that is operating on the virtual processor 160 is moved to a lower latency processor, such as the edge computing processor 150 (step 420).

In response to the same event, a computing task associated with or originating at a second UE 120 may be moved from the low latency processor (e.g., the edge computing processor 150) to a higher latency processor. This higher latency processor may be the same virtual processor 150 that was originally serving the first UE 110 or it may be a different processor. In any case, this processor has a higher latency than the edge computing processor 130. This occurs at step 430 of Figure 4.

It should be noted that step 430 may occur before, after or at the same time as step 420. Furthermore, the event may trigger step 430 or step 430 may be triggered by another condition (e.g., a capacity or processing threshold being reached at the lower latency processor). If the lower latency processor can serve both UEs 110 and 120 within sufficient parameters or quality of service (for each computing task), then both computing tasks may continue on the lower latency processor. However, if further events cause additional computing tasks to move to the lower latency processor, then one or more computing tasks may move to one or more other higher latency processors. This frees up capacity at the lower latency processor to execute higher priority computing tasks.

The event may be transient and the higher priority computing tasks may be moved back to a higher latency processor. This may be after a certain time, following a further event (e.g., the UE 110 moving out of the particular location), and/or following another condition. The event may be more permanent so that the lower latency processor continues to execute the computing task until it completes. Further events from the same UE 110 that generated the computing task that was moved to the lower latency processor may also be executed (e.g., by default) on the lower latency processor. Alternatively, any new computing tasks may be allocated by other means (e.g., on a first come, first served basis).

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, the transfer of computing tasks (e.g., the breakout process) between processors may be managed by the core network 140 but may also be managed by other components, such as a switch, firewall or other service.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing computing resources providing services to user equipment, UE, the method comprising the steps of:
receiving information indicating an event, wherein the event has an associated first user equipment, UE, and further wherein there is at least one computing task executing on a first processor and originating at the first user equipment, UE; and
in response to receiving the information indicating the event, moving the at least one computing task to a second processor from the first processor, wherein data generated by the second processor executing the at least one computing task is provided to a consumer of the data at a lower latency than data generated by the first processor executing the at least one computing task to the same consumer of the data.

2. The method of claim 1, wherein in response to receiving the information indicating the event, the method further comprises moving at least one computing task originating at a second UE executing on the second processor to a different processor, wherein data generated by the different processor executing the at least one computing task is provided to a consumer of the data at a higher latency than data generated by the first processor executing the at least one computing task to the same consumer of the data.

3. The method of claim 2, wherein the different processor is the first processor.

4. The method according to any previous claim, wherein the consumer of the data provided by the first or second processor is the UE where the computing task originates.

5. The method according to any previous claim, wherein the second processor is closer to the first UE than the first processor.

6. The method according to any previous claim, wherein the second processor is an edge computing processor.

7. The method of claim 6, wherein the edge computing processor is a multi-access edge computing, MEC, processor.

8. The method according to any previous claim, wherein the first processor is a virtual or cloud computing processor.

9. The method according to any previous claim, wherein the information indicating an event originates at a sensor.

10. The method of claim 9, wherein the sensor is within the first UE.

11. The method of claim 9 or claim 10, wherein the sensor is a location sensor.

12. The method according to any previous claim, wherein the event is the first UE entering a location.

13. A system comprising:
a first processor;
a second processor; and
a data management component configured to:
receive information indicating an event, wherein the event has an associated first user equipment, UE, and further wherein there is at least one computing task executing on the first processor and originating at the first user equipment, UE; and
in response to receiving the information indicating the event, move the at least one computing task to the second processor from the first processor, wherein data generated by the second processor executing the at least one computing task is provided to a consumer of the data at a lower latency than data generated by the first processor executing the at least one computing task to the same consumer of the data.

14. The system of claim 13, wherein the data management component is a user plane function, UPF.

15. The system of claim 13 or claim 14, wherein the second processor is a multi-access edge computing, MEC, processor and/or within a mobile private network, MPN.
